# EUROPEAN PATENT SPECIFICATION

(11) **EP 1 486 439 B1**
(45) Date of publication and mention of the grant of the patent: **10.10.2007**
(21) Application number: 04013071.8
(22) Date of filing: 03.06.2004
(51) Int. Cl.: B65G 47/244, B65G 47/84

(54) **System for horizontally translating and orientating objects, particularly containers with continuous motion**
System zum horizontalen, translatorischen Bewegen und Ausrichten von Artikeln, insbesondere Behälter in kontinuierlicher Bewegung
Système pour déplacer horizontalement en translation et orienter des articles, notamment des récipients en mouvement continu

(30) Priority: 10.06.2003 IT BO20030352
(43) Date of publication of application: 15.12.2004
(73) Proprietor: Cosmopack S.r.l., 40100 Modena (IT)
(72) Inventor: Vecchi, Celeste, 41100 Modena (IT); Campagnoli, Roberto, 40134 Bologna (IT); Lacinio, Salvatore, 40050 Monte Sanpietro (Bologna) (IT)
(74) Representative: Gustorf, Gerhard

(56) References cited:
- EP-A- 0 982 247
- EP-A- 1 246 767
- GB-A- 2 230 245
- US-A- 3 837 474

## Description

### Technical field

- The present invention relates to a system for horizontally translating and orientating objects, particularly containers, with continuous motion.

### Prior art

- At the present time (see for example EP 148 371 A) there are known systems for rotating containers and translating them with continuous motion along a longitudinally extending translation and rotation line.
- Said systems have the drawback of requiring multiple operating means and complicated transmission systems, with consequent low operating speeds which result in low production capacity, as well as low flexibility with respect to changes of format of the containers.
- EP 1 246 767 B which is the most pertinent prior art document discloses a system similar to that of the preamble of claim 1. In this known system a continuous stream of products, e. g. cartons with eggs, supplied by the first conveyor at equal interspaces and with equal orientation, is distributed over a plurality of tracks by means of a pattern former. The pattern former comprises steering tracks and cams used to place the products not only in different positions in transverse direction but also to rotate them such that on the second conveyor the products are supplied have a predetermined pattern in transverse and longitudinal orientation.

### Brief description of the invention

- The object of the present invention is to overcome the aforesaid drawbacks.
- The invention, which is characterized by the claims, resolves the problem of creating a system for horizontally translating and orientating objects, particularly containers, with continuous motion, in which the said system is provided with a translation and orientation line, comprising:
   first conveyor means, in a lower position, designed to translate the containers in single file, one after another, in the downstream direction with respect to the aforesaid translation and orientation line; second conveyor means, in an upper position, designed to translate one or more rotary gripper units in single file, one after another, in said downstream direction in which each rotary gripper unit includes a first device for opening and closing the jaws of the gripper and a second device for rotating said gripper; sensor means, positioned in the proximity of the upstream portion of the translation and orientation line, designed to read the orientation of the containers; first actuator means, designed to control the first device for opening and closing the jaws of the rotary grippers of the rotary gripper units; second actuator means, desinged to control said second device for rotating the rotary grippers of the rotary gripper units; and synchronization means designed to control the synchronization of the aforesaid means.
- The use of a system of the aforesaid type yields the following results: the containers can be orientated selectively, the quantity of operating means is reduced, and the system and the corresponding mechanical transmissions are simplified.
- The advantages provided by the present invention consist essentially in the fact that the system is more reliable, more efficient and safer, in the fact that the containers are securely translated and orientated, in the fact that operations for a change of format are facilitated, and in the fact that higher operating speeds can be used with a consequent increase in production capacity.

### Brief Description of the Figures

- Further characteristics and advantages of the present invention will be made clearer by the following description of some preferred practical embodiments of the invention, provided here purely by way of example and without restrictive intent, with reference to the attached figures in which:
   Figure 1 shows schematically the system proposed by the present invention;
   Figure 1A shows schematically a variant embodiment of the system proposed by the present invention;
   Figure 2 shows an enlarged detail of the system proposed by the present invention;
   Figure 3 is an illustration from above of the system proposed by the present invention, in a first operating configuration;
   Figure 3A is an illustration from above of the system proposed by the present invention, in a second operating configuration;
   Figure 4 shows schematically a detail of the present invention;
   Figures 5 and 5A show an alternative embodiment of the present invention.

### Exemplary Description of the First Preferred Embodiment

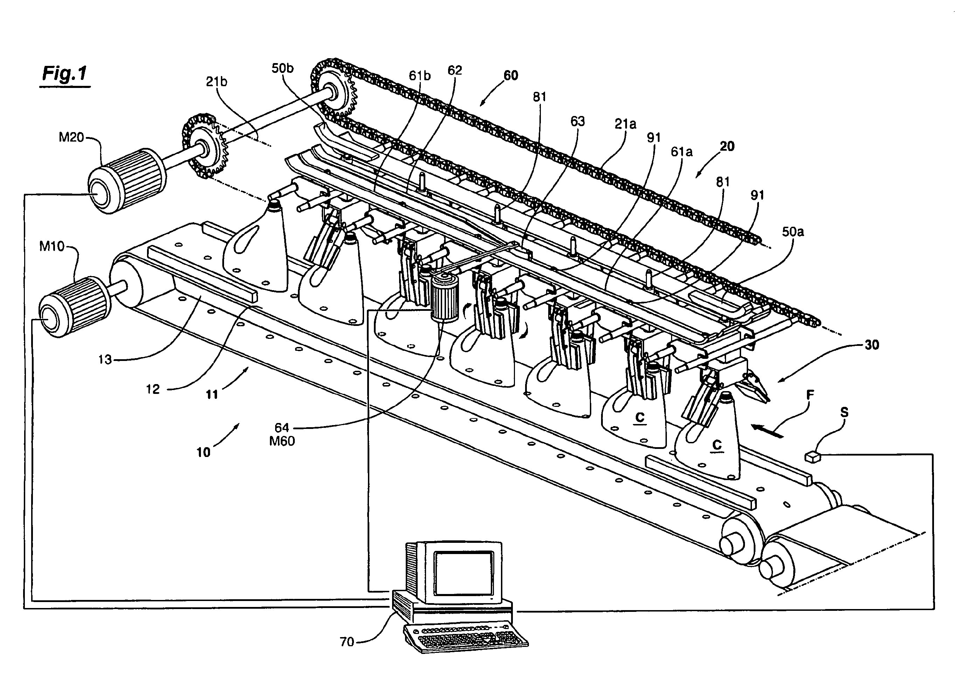

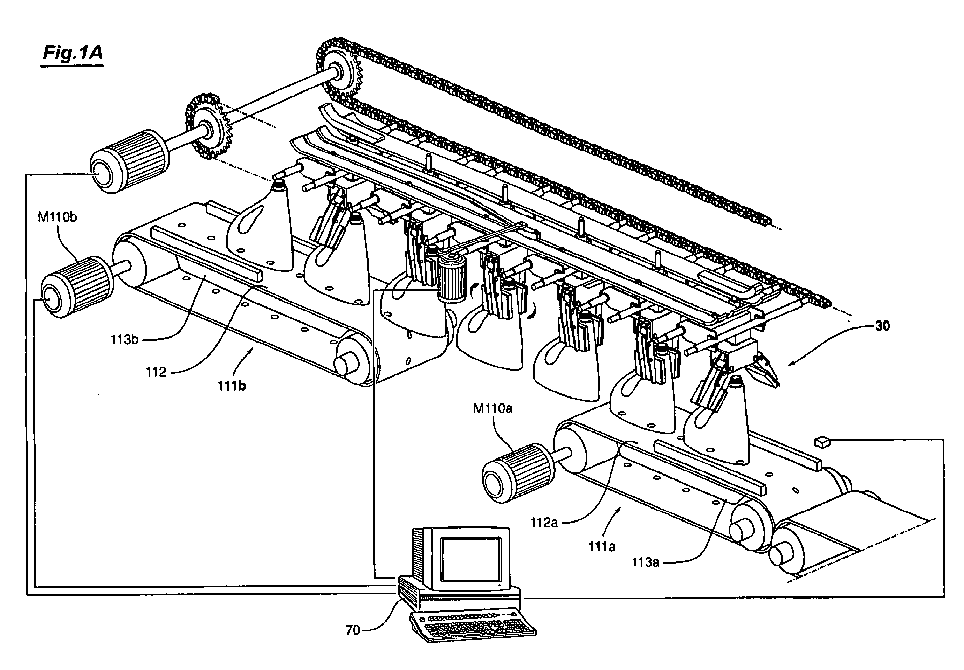

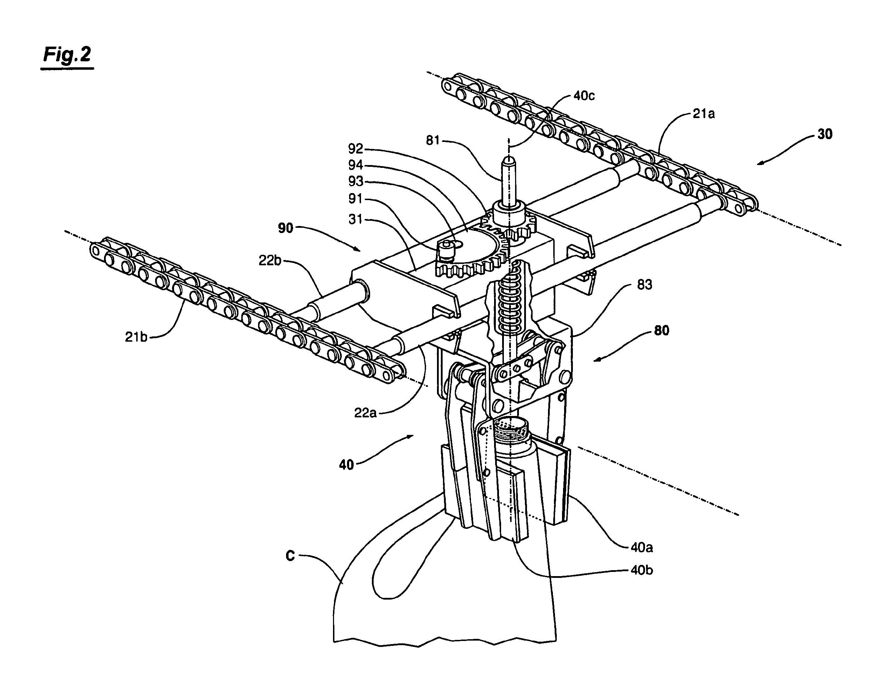

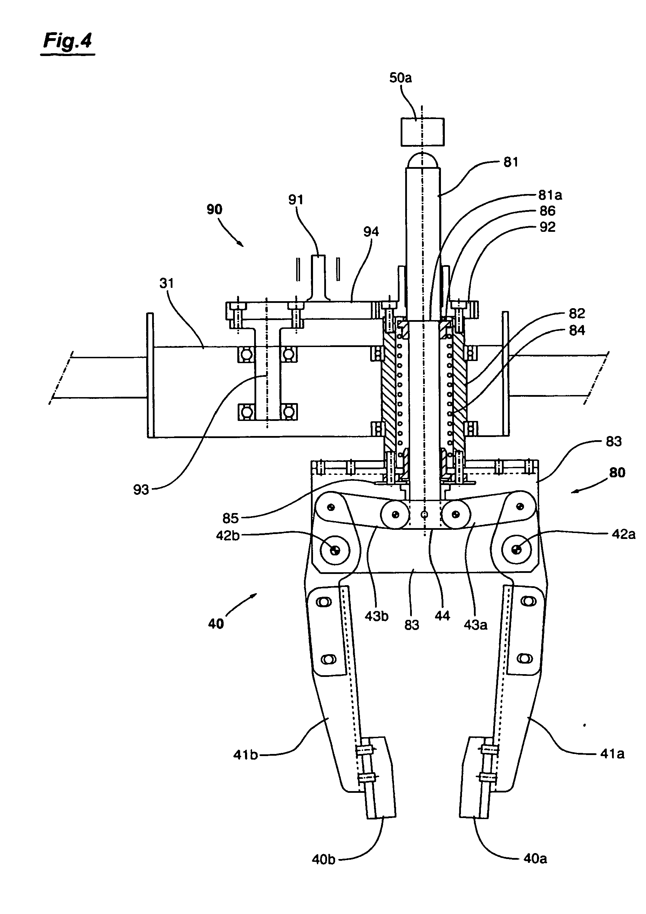

- With reference to Figures 1 and 2, the system for horizontally translating and orientating objects, particularly containers C, with continuous motion, comprises a translation and orientation line extending longitudinally and rectilinearly.
- The said translation and orientation line substantially comprises: first conveyor means 10, in a lower position, designed to translate the containers C, in single file, one after another, in the downstream direction with respect to the aforesaid translation and orientation line, with respect to the direction of translation indicated by the arrow F; second conveyor means 20, in an upper position, designed to translate one or more units 30 with rotary grippers 40, in single file, one after another, in the downstream direction with respect to the aforesaid translation and orientation line, in which each unit 30 with a rotary gripper 40 includes first device 80 for opening and closing the jaws 40a-40b of the rotary gripper and second device 90 for rotating the said gripper 40; sensor means S, positioned in the proximity of the upstream portion of the said translation and orientation line, designed to read the orientation of the containers C; first actuator means 50a and 50b, designed to control the opening and/or the closing of the jaws 40a and 40b of the rotary grippers 40; second actuator means 60, designed to control the rotation of the rotary grippers 40; and synchronization means 70 designed to synchronize and control the aforesaid means.
- With reference to the first conveyor means 10, these comprise a conveyor 11 having a conveyor belt 12 running in a closed loop, in which the said conveyor 11 is driven by a corresponding servomotor M10, such as a controllable brushless servomotor, which is controlled by the synchronization means 70, in which the upper branch of the said closed loop extends in a lower position in the downstream direction with respect to the aforesaid translation and orientation line, to support the bases of the containers C.
- In the alternative embodiment shown in Fig. 1A, the first conveyor means 10 comprise two separate conveyors with conveyor belts, and more particularly a first conveyor 111a with a conveyor belt 112a running in a closed loop, driven by a corresponding servomotor M110a controlled by the synchronization means 70, and a second conveyor 111b with a conveyor belt 112b running in a closed loop, driven by a corresponding servomotor M110b controlled by the synchronization means 70. In this context, it is also possible to provide a transmission between the conveyors 111a and 111b in order to drive them by means of a single servomotor.
- If required and/or necessary, in view of the particular nature of the bases of the containers and/or their particular weight or lightness, the said conveyor belts 12, 112a, 112b can be made in the form of suction belts, for example by making the said belts perforated and/or porous and/or of the articulated mesh type, and by providing under the upper branches of the belts a suction vessel 13, 113a, 113b connected to a suction source which is not shown.
- Additionally, the said belts 12, 112a, 112b can be provided if required with a container support surface having a low frictional coefficient, in order to facilitate the rotation of the containers, as will be explained more fully below.
- With reference to the second conveyor means 20, these preferably comprise a closed-loop conveyor, extending longitudinally, for supporting and translating the said units 30 with rotary grippers 40 along an orbital path located in a vertical and longitudinal plane, in which the lower branch of the said orbital path forms the working branch for the said units 30 with rotary grippers 40.
- More particularly, the said second conveyor means 20 comprise a belt or chain conveyor 21a and 21b, running in closed loops in corresponding vertical and longitudinal planes, by means of corresponding pairs of sprockets, in which the said conveyor is driven by a servomotor M20, for example a controllable brushless servomotor, which is controlled by the synchronization means 70, in which the said chains 21 a and 21 b are designed to carry transverse bars 22a-22b on which the aforesaid units 30 with rotary grippers 40 are positioned.
- Each unit 30 with a rotary gripper 40 (see also Fig. 4) includes a first device 80, for opening and closing the jaws 40a and 40b on command, and a second device 90, for rotating the rotary gripper 40 on command.
- With reference to the first device 80, this can be made in various embodiments, of the mechanical and/or electrical and/or electronic and/or pneumatic type, designed to open and close the gripping jaws 40a-40b of the rotary gripper 40 on command.
- In the present embodiment, described purely by way of example, the said first device 80 comprises a first operating element 81, the upper end of which extends upwards beyond the plane of translation of the said units 30, whose said first element 81, during the translation of the said units 30 along the said translation and orientation line, as described more fully below, interacts with the first actuator means 50b and 50a (see Fig. 1) positioned along the said translation and orientation line, to cause the opening and closing of the jaws 40a and 40b.
- With reference to Figs. 2 and 4, the said first device 80 comprises, for example, a sleeve 82, supported rotatably by a frame 31 of the unit 30, in which the said sleeve 82 carries a gear wheel 92 fixed at its upper end, for the reasons which will be stated more fully below, and a rotating frame 83, for supporting the rotary gripper 40, at its lower end.
- In the present embodiment, described purely by way of example, the said element 81 is shaped in the form of a bar which is supported slidably and axially within the said sleeve 82, in which the said bar 81 is pushed upwards by a spring 84, whose lower end presses on a ring 85 fixed to the sleeve 82 and whose upper end presses on a bush 86, in which the upper end of the bush bears on a shoulder 81 a formed on the said shaft 81 in order to push the said shaft 81 upwards.
- The aforesaid shaft 81 is therefore free to slide, by means of axial oscillations, axially downwards and then to be pushed back upwards by the spring 84, and, substantially, in the course the said movements it opens and closes the gripping jaws 40a-40b of two levers 41 a and 41 b, pivoted at 42a and 42b on the rotating frame 83, in which the upper ends of the said levers 41 a and 41b are connected to the lower end of the said operating bar 81, by means of articulations 43a-44 and 43b-44 respectively.
- In this context, depending on the shape and/or weight and/or nature of the containers, and also for other reasons, the mechanism described above in relation to the rotary gripper 40 can also be made in other embodiments, and moreover the gripping jaws 40a and 40b can have gripping profiles designed to match the shape of the containers and/or gripping buffers with a greater or lesser thickness, to enable the format to be changed.
- With reference to the second device 80, this can be made in various embodiments, of the mechanical and/or electrical and/or electronic and/or pneumatic type, designed to execute a rotation of the rotary gripper 40 on command.
- In the present embodiment, described purely by way of example, the said second member 90 comprises a second operating element 91, which is supported movably by the said unit 30, in which the said second operating element 91 is made to interact, during the translation of the said unit 30 along the translation and orientation line, with second actuator means 60, which are positioned along the translation and orientation line as described more fully below.
- More particularly, the said second element 91 is a roller spindle supported and positioned on the upper face of a toothed sector 94, in an eccentric position with respect to the centre 93 of pivoting and rotation of the said toothed sector 94, in which the latter is engaged with the gear wheel 92 fixed on the top of the sleeve 82, in such a way that the rotational oscillations imparted to the said toothed sector 94 cause a rotation of the wheel 92 and consequently a rotation of the rotating frame 83 and of the rotary gripper 40.
- With reference to the sensor means S, these preferably comprise an optoelectronic sensor, but in practice can also use other electromechanical and/or electropneumatic sensors and/or sensors of other types, preferably selected in accordance with the shapes of the containers to be orientated, and in any case designed to read the orientation of the said containers and to communicate the said reading to the synchronization means 70.
- The aforementioned first actuator means 50a-50b comprise two cam profiles, positioned substantially along the initial and final segments of the lower orbital path described by first operating members 81 of the units 30 and, additionally, in the area of downward return and upward return of the said units 30, in order to open the jaws 40a-40b before they reach a position, in their movement from above to below, at the side of the containers C in the initial area and in the final area of the translation and orientation line for the reasons explained below.
- The second actuator means 60 substantially comprise (see Fig. 1) a primary track 61a-61b and a secondary branch track 62, extending longitudinally along the said translation and orientation line, and a switch blade 63 which is moved into its two operating positions of switching and non-switching by means of an actuator 64, in this particular case a brushless motor M60, which is connected to the synchronization means 70, making it possible to guide each roller spindle 91 into one or other of the said tracks 61 b and 62 selectively, in succession and with the correct timing, during the downstream translation of the unit 30.

### Operation

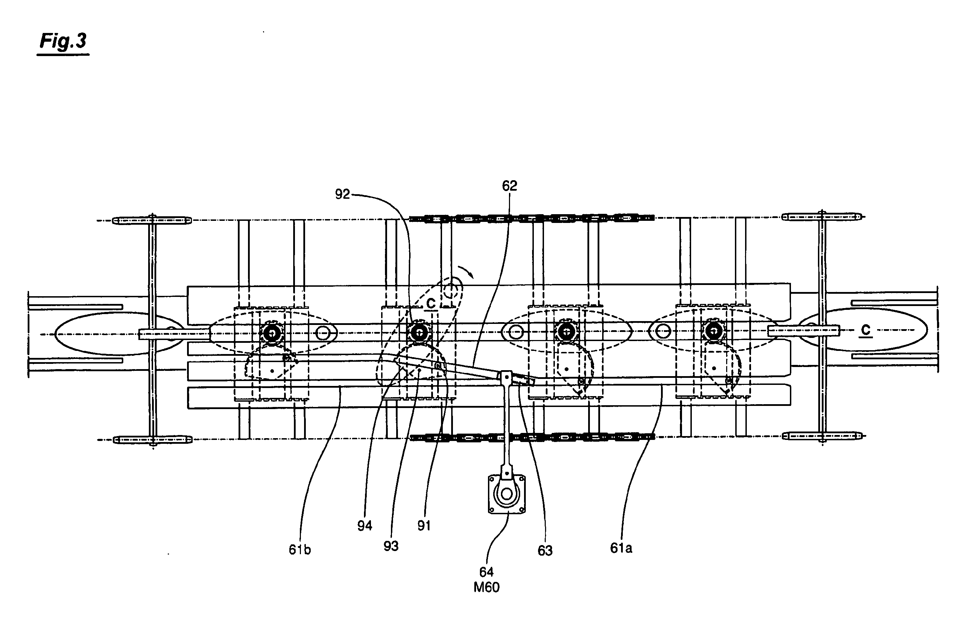

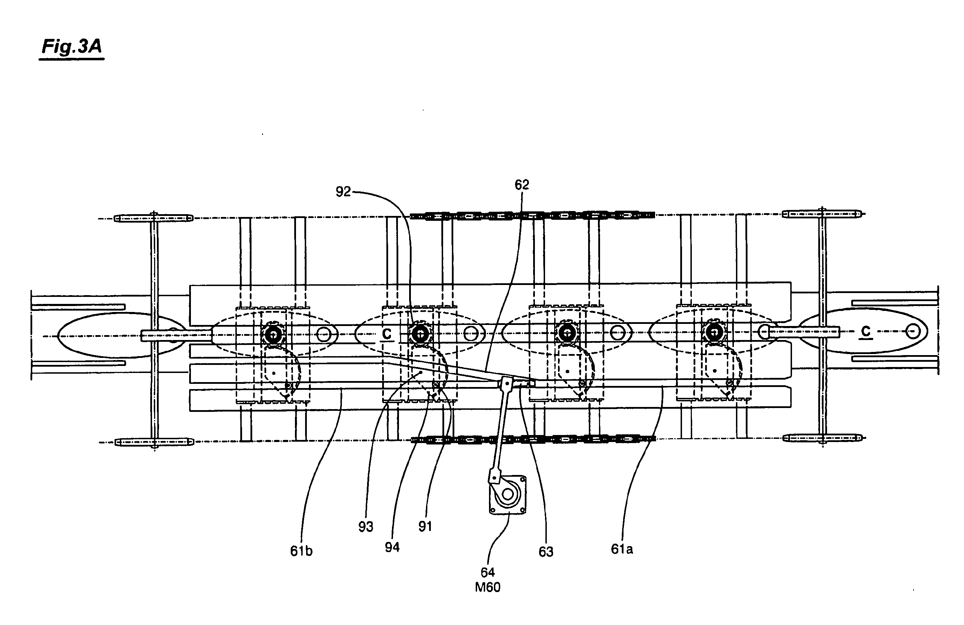

- With reference to the above structural description, the containers C are fed in the proximity of the entry end of the system proposed by the present invention, in a staged way and in synchronization with the units 30 with rotary grippers 40 which are being translated downwards in the proximity of the start of the translation and orientation line.
- The containers C fed in this way and supported by the belt 12 (or 112a - Fig. 1A) are translated downstream along a first translation and gripping segment of the said translation and orientation line, and, above this, a corresponding unit 30 with a rotary gripper 40 moves in the same direction, at the same linear speed of advance, and in vertical alignment with each container C.
- Additionally, in the initial portion of the said first translation and gripping segment, the upper end of the bar 81 encounters the cam profile 50a, causing the jaws 40a and 40b to open, and then, when the jaws 40a-40b move downwards they are positioned without interference on the opposite sides of the container C, and then close and grip the container when the said cam profile is interrupted, because of the return action of the spring 84.
- Also in the said first translation and gripping segment (but farther upstream if preferable or if required), the sensor means S read the horizontal orientation of each container C being translated, and each individual reading is then associated by the synchronization means 70 with the corresponding unit 30 with the rotary gripper 40 which grips the container.
- Each individual unit 30 with a rotary gripper 40 and the corresponding gripped container C is then translated along a second central translation and orientation segment of the translation and orientation line, and, in the said second segment, the synchronization means 70, according to the orientation of the container associated with the unit 30 which is being translated, set the switch blade 64 to one of its two working positions, and, more particularly, if the unit 30 has been associated with a correctly orientated container, the said blade is positioned in alignment with the primary track 61 b so that the roller spindle 91 is not diverted, whereas, if the unit 30 has been associated with an incorrectly orientated container, the said blade 64 is set to the switching position in order to divert the roller spindle into the branch track 62.
- In this context, it is clear that, if the roller spindle 91 is made to run downstream along the primary track 61 b (see also Fig. 3A), the toothed sector 94 does not rotate, and therefore the gear wheel 92 and the rotary gripper 40 are not rotated, while, on the other hand (see fig. 3), if the roller spindle 91 is made to run downstream along the branch track 62, the toothed sector 94 rotates, and therefore the gear wheel 92 and the rotary gripper 40 are rotated.
- In the present exemplary embodiment, because of the rotation imparted to the toothed sector 94 when the roller spindle 91 moves along the oblique portion of the branch track 62, and because of the transmission ratio between the toothed sector 94 and the gear wheel 92, at the end of the diversion along the aforesaid oblique portion the rotary gripper 40 and the corresponding container will have rotated through 180°.
- Therefore, at the end of the second translation and orientation segment, all the containers are correctly orientated and thus enter a third segment for translation and release, in which, to summarize, the conveyor belt 12 (or 112b - Fig. 1A) moves at the same linear speed as the units 30 with rotary grippers 40 and, in this operating configuration, the bar 81 encounters the cam profile 50b, causing the opening of the jaws 40a-40b and the corresponding release of the container C, which continues to move downstream, being supported and propelled by the belt 12 (or 112 - Fig. 1A), while the unit 30 with the rotary gripper 40, with its jaws 40a-40b open, is diverted upwards.
- In this context, one or more guides, not illustrated here, are positioned in the upper part of the conveyor 20 carrying the gripper units 30, and these guides move the roller spindles 91 into the correct initial position during the said passive travel of the said units 30, in order to enable a new operating travel to be commenced when the said units arrive in the proximity of the start of the translation and orientation line.

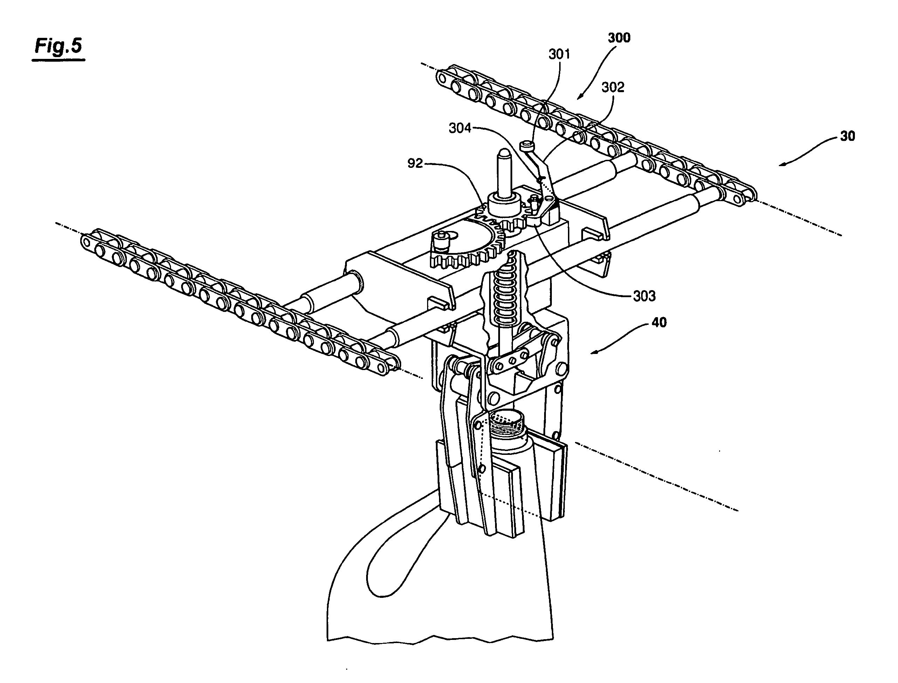

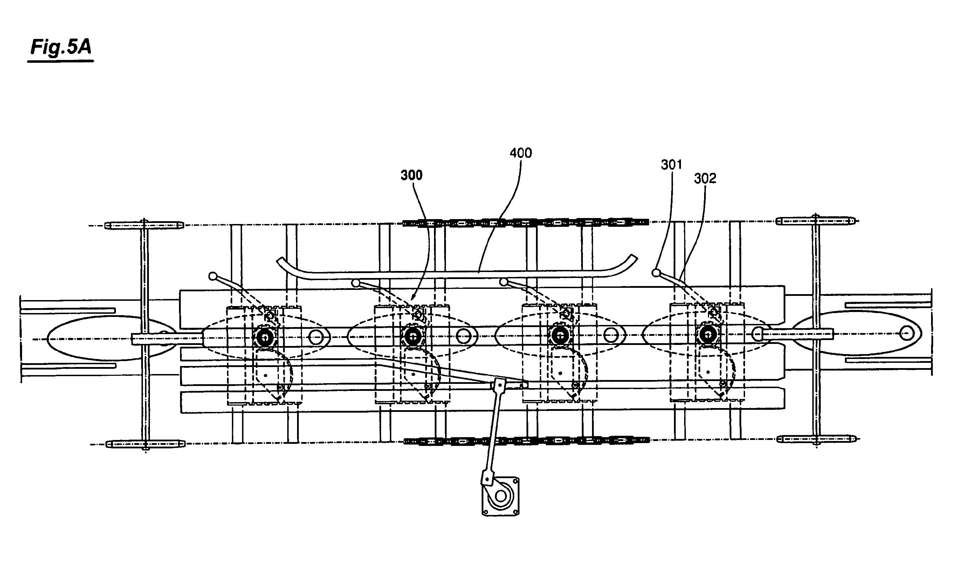

### Variant shown in Figures 5 and 5A

- With reference to Figures 5 and 5A, these show a variant embodiment of the system proposed by the present invention.
- In the said variant, substantially, a third device 300 is additionally provided, and is designed to prevent or allow the rotation of the said rotary gripper 40.
- The said device 300, which preferably acts on the gear wheel 92 or on the sleeve 82 by a coupling or clutch means, such as a ratchet gear, comprises an operating element 301, positioned at the end of a lever 302, whose opposite end carries a locking tooth 303 designed to be inserted between the teeth of the wheel 92, in which the said lever is returned to the position of insertion of the tooth 303 by means of a spring 304.
- With reference to Fig. 5A, the said roller 301 is designed to interact with a cam profile 400 extending longitudinally, preferably only along the second, central, translation and orientation segment, in order to achieve, in the course of the translation of the unit 30 with the rotary gripper 40 along the translation and orientation line, the locking of the rotary gripper 40 along the first translation and gripping segment, the contact of the roller 301 with the profile 400, and consequently the release of the rotary gripper 40, along the second translation and orientation segment, and the locking of the rotary gripper 40 along the third translation and release segment.
- The description of the system for horizontally translating and orientating objects, particularly containers, with continuous motion is provided purely by way of example and without restrictive intent, and it is therefore evident that the system can be modified or varied in all ways suggested by experience and/or by its use or application and falling within the scope of the following claims, which also form a supplementary part of the present description.

## Claims

1. System for horizontally translating and orientating objects, particularly containers (C), with continuous motion along a translation and orientation line comprising:
- first conveyor means, in a lower position, designed to translate the containers (C), in single file, one after another, in the downstream direction with respect to the aforesaid translation and orientation line;
- second conveyor means (20), in an upper position, designed to translate one or more units (30) with rotary grippers (40), in single file, one after another, in the downstream direction with respect to the aforesaid translation and orientation line, in which each unit (30) with a rotary gripper (40) includes a first device (80) for opening and closing the jaws (40a-40b) of the gripper (40) and a second device (90) for rotating said gripper (40);
- first actuator means (50a-50b), designed to control said first device (80) for opening and closing the jaws (40a-40b) of the rotary grippers (40) of the units (30) with rotary grippers (40);
- second actuator means (60), designed to control said second device (90) for rotating the rotary grippers (40) of the units (30),
**characterized in that**
- sensor means (S) are positioned in the proximity of the upstream portion of said translation and orientation line, designed to read the orientation of the containers (C);
- synchronization means (70) are designed to control the synchronization between the aforesaid means;
- said second device (90) comprises a second operating element (91) movably supported by said unit (30) with a rotary gripper (40) in which during the translation of said unit (30) along said translation and orientation line said second operating element (91) is made to interact with the second actuator means (60) positioned along the translation and orientation line;
- said second actuator means (60) comprise a primary track (61 a-61 b), designed to impart the non-rotation command, a branch track (62) from said primary track, designed to impart the rotation command, and a commanded movable switch blade (63) designed to guide the second operating element (91) along said first primary track (61 b) or along said second branch track (62) during the translation of the units (30) along said translation and orientation line.

2. System according to claim 1, **characterized in that** said synchronization means (70) comprise a programmable control unit (70); **in that** said second conveyor means (20) are controlled by the said synchronization means (70); **in that** said sensor means (S) are connected to said synchronization means (70); **in that** said second actuator means (60) are controlled by said synchronization means (70); **in that** said synchronization means (70) associate the individual orientations read by the sensor means (S) for each individual container (C) with the corresponding unit (30) with a rotary gripper (40) which grips it, **in that** the synchronization means (70) control the position of downstream translation for each unit (30) with a rotary gripper (40) along the translation and orientation line, and **in that** said synchronization means (70) operate the second actuator means (60) with the correct timing during the downstream translation of the unit (30) in order to move the movable switch blade (63) to control the rotation of the rotary grippers (40) for each unit (30) with a rotary gripper (40) during its translation along the translation and orientation line in relation to the associated orientation of the container (C) read previously.

3. System according to claim 1 or 2, **characterized in that** said first conveyor means (10) comprise a conveyor (11) with a conveyor belt (12) running in a closed loop, in which the upper branch extends in a lower position from upstream to downstream of the aforesaid translation and orientation line to support the bases of the containers, and **characterized in that** said units (30) with rotary grippers (40), one after another, provide to grasp every single container along the upstream portion of the conveyor belt (12) and then provide to rotate selectively the containers which are supported by the conveyor belt (12) moving downstream the units (30) with rotary gripper (40) with a respective grasped containers (2) and sliding the base of the containers (12) on the conveyor belt (12).

4. System according to claim 1 or 2, **characterized in that** said first conveyor means (10) comprise a first conveyor (111a) with a conveyor belt (112a) whose upper branch extends in a lower position along a first initial translation and gripping segment of the translation and orientation path, and a second conveyor (111b) with a conveyor belt (112b) whose upper branch extends in a lower position along a third and final translation and release segment of the translation and orientation path.

5. System according one of claims 1 to 4, **characterized in that** said translation and orientation line comprises:
- a first segment for translation and gripping, in which the first conveyor means (10) and the second conveyor means (20) translate in a downstream direction, respectively, the containers (C) and the units (30) with rotary grippers (40), at the same linear speed and in vertical alignment with each other, in which the jaws (40a-40b) of the corresponding units (30) with rotary grippers (40) are operated to close in order to grip corresponding containers (C), and in which the horizontal orientation of each container (C) is read by the sensor (S);
- a second segment for translation and orientation, in which the containers (C) gripped by the units (30) with rotary grippers (40) are translated in the downstream direction, and in which the rotary gripper (40) of each unit (30) is either rotated or not rotated in accordance with the preceding reading of the horizontal orientation of the container (c) carried by this gripper (40);
- a third segment for translation and release, in which the first conveyor means (10) and the second conveyor means (20) translate in a downstream direction, respectively, the containers (C) and the units (30) at the same linear speed, and in which, during said translation, the jaws (40a-40b) of the corresponding units (30) with rotary grippers (40) are operated to open to release the corresponding containers (C).

6. System according to any one of the preceding claims, **characterized in that** the orientation of the individual containers (C) is read in a position upstream with respect to the translation and orientation line, and each individual orientation read by the sensor means (S) is then associated with the corresponding unit (30) with a rotary gripper (40) which grips the container (C).

7. System according to any one of the preceding claims, **characterized in that** the conveyor belt (12, 112a, 112b) is of the suction type.

8. System according to any one of the preceding claims, **characterized in that** the conveyor belt (12, 112a, 112b) has a supporting surface with a low coefficient of friction for the containers (C).

9. System according to any one of the preceding claims, **characterized in that** said second conveyor means (20) comprise a closed-loop conveyor, extending longitudinally, designed to support and translate said units (30) with rotary grippers (40) along an orbital path located in a vertical and longitudinal plane, and **in that** the lower branch of said orbital path forms the working branch for the units (30) with rotary grippers (40).

10. System according to any one of the preceding claims, **characterized in that** the first device (80) of each unit (30) with a rotary gripper (40) opens and closes the jaws (40a-40b) during the translation of the units (30) along the translation and orientation line.

11. System according to any one of the preceding claims, **characterized in that** in the initial portion of said translation and orientation line the units (30) with rotary grippers (40) have the jaws (40a, 40b) open transversally so that when the jaws (40a-40b) move downwards said jaws (40a, 40b) can be positioned without interference on the opposite sides of the containers (C).

12. System according to any one of the preceding claims, **characterized in that** said first device (80) comprises a first operating element (81) supported by said units (30) with rotary grippers (40) and **in that**, during the translation of said units (30) along the translation and orientation line, said first operating element (81) is made to interact with corresponding actuator means (50a, 50b) positioned along the translation and orientation line.

13. System according to claim 12, **characterized in that** said first operating element (81) comprises an operating bar (81) supported in an axially movable way by said unit (30) with a rotary gripper (40), **in that** said operating bar (81) has its free operating end in an upper position during the translation of said unit (30) along the translation and orientation line, and **in that** the corresponding actuator means (50a, 50b) comprise one or more cam profiles (50a, 50b) extending longitudinally and in an upper position along the translation and orientation line and designed to impart an axial movement to said operating bar (81).

14. System according to any one of the preceding claims, **characterized in that** the second device (90) of each unit (30) rotates and/or does not rotate the jaws (40a-40b) of the rotary gripper (40) during the translation of the units (30) along the translation and orientation line.

15. System according to claim 14, **characterized in that** said second operating element (91) comprises a roller spindle (91) positioned on the upper face of a toothed sector (94) in an eccentric position with respect to the centre (93) of pivoting and rotation, **in that** said toothed sector (94) engages with a gear wheel (92) fixed on the top of a sleeve (72) supported rotatably by the frame (31) of said unit (30), the opposite end of the sleeve being fixed to the rotary gripper (40), and **in that** the second actuator means (60) comprise cam tracks extending longitudinally, in which said roller spindle (91) is made to run during the translation of the units (30) along the translation and orientation line.

16. System according to any one of claims 13 to 15, **characterized in that** said operating bar (81) is positioned coaxially with respect to the axis (40c) of rotation of the rotary gripper (40).

17. System according to claim 15 or 16, **characterized in that** said operating bar (81) is positioned coaxially and slidably within said sleeve (82).

18. System according to any one of the preceding claims, **characterized in that** said synchronization means (70) comprise a programmable control unit (70); **in that** said first conveyor means (10) are controlled by the said synchronization means (70); **in that** said second conveyor means (20) are controlled by said synchronization means (70); and **in that** said control unit (70) operates the first conveyor means (10) and the second conveyor means (20) at a speed such that the containers (C) and the units (30) are translated at the same translation speed.

19. system according to any one of the preceding claims, **characterized in that** said synchronization means (70) comprise a programmable control unit (70); **in that** said first conveyor means (10) are operated by a corresponding servomotor (M10) controlled by said synchronization means (70); **in that** said second conveyor means (20) are operated by a corresponding servomotor (M20) controlled by said synchronization means (70); **in that** said sensor means (S) are connected to said synchronization means (70); **in that** said second actuator means (60) are operated by means of a corresponding actuator (M60) controlled by said synchronization means (70).

20. System according to any one of the preceding claims, **characterized in that** said means (30) with a rotary gripper (40) comprise a device (300) designed to lock or release the rotation of the rotary gripper (40) on command.

21. System according to claim 20, **characterized in that** said device (300) comprises a movable operating element (301) supported by said units (30) with rotary grippers (40) and **in that** during the translation of said units (30) along the translation and orientation line the movable operating element (301) is made to interact with corresponding actuator means (400) positioned along the translation and orientation line.

22. System according to claim 20 or 21, **characterized in that** said operating element (301) comprises a roller spindle (301) cam follower positioned at the end of a lever (302) movable in a plane parallel to the translation and orientation line, and **in that** the corresponding actuator means (400) comprise a longitudinally extending cam profile (400), along which said roller spindle (301) is made to run during the translation of the units (30) along the translation and orientation line.

23. System according to any one of claims 20 to 22, **characterized in that,** during the translation of the unit (30) with a rotary gripper (40) along the translation and orientation line, said device (300) executes: the locking of the rotation of the rotary gripper (40) along a first translation and gripping segment; the freeing of the rotation of the rotary gripper (40) along a second translation and orientation segment; and the locking of the rotation of the rotary gripper (40) along a third translation and release segment.

## Patentansprüche

1. System zum horizontalen Fortbewegen und Ausrichten von Gegenständen, insbesondere Behältern (C), in kontinuierlicher Bewegung entlang einer Translations- und Ausrichtebahn, umfassend:
- erste Fördermittel (10) in einer unteren Position, die so ausgelegt sind, daß sie die Behälter (C) in einer einzelnen Reihe nacheinander in Förderrichtung der genannten Translations- und Ausrichtebahn nach vom bewegen;
- zweite Fördermittel (20) in einer oberen Position, die so ausgelegt sind, daß sie eine oder mehr Einheiten (30) mit schwenkbaren Greifern (40) in einer einzigen Reihe nacheinander bezüglich der genannten Translations- und Ausrichtebahn nach vom bewegen, wobei jede Einheit (30) mit einem schwenkbaren Greifer (40) eine erste Einrichtung (80) zum Öffnen und Schließen der Greifbacken (40a - 40b) der Greifer (40) und eine zweite Einrichtung (90) zum Drehen der Greifer (40) hat;
- erste Betätigungsmittel (50a - 50b) zur Steuerung der ersten Einrichtung (80) zum Öffnen und Schließen der Greifbacken (40a - 40b) der schwenkbaren Greifer (40) der Einheiten (30) mit den schwenkbaren Greifern (40);
- zweite Betätigungsmittel (60) zum Steuern der zweiten Einrichtung (90) zum Drehen der schwenkbaren Greifer (40) der Einheiten (30),
**dadurch gekennzeichnet, daß**
- Sensormittel (S) in der Nähe des Eingangsabschnittes der Translations- und Ausrichtebahn angeordnet sind und dazu dienen, die Ausrichtung der Behälter (C) zu erfassen;
- Synchronisiermittel (70) vorgesehen sind, um die Synchronisation zwischen den genannten Mitteln zu steuern;
- die zweite Einrichtung (90) ein zweites Stellelement (91) aufweist, das beweglich an der Einheit (30) mit einem drehbaren Greifer (40) angeordnet ist, wobei während der Vorwärtsbewegung der Einheit (30) entlang der Translations- und Ausrichtebahn das zweite Stellelement (91) mit den zweiten Betätigungsmitteln (60) zusammenwirkt, die entlang der Translations- und Ausrichtebahn angeordnet sind;
- die zweiten Betätigungsmittel (60) eine Primärbahn (61a - 61b) zur Erteilung eines Befehls zum Nichtschwenken sowie eine von der Primärbahn abzweigende Bahn (62) zum Erteilen eines Schwenkbefehls sowie einen gesteuert beweglichen Ablenkflügel (63) aufweisen, der dazu dient, während der Vorwärtsbewegung der Einheiten (30) auf der Translations- und Ausrichtebahn das zweite Stellelement (91) entweder entlang der Primärbahn (61b) oder entlang der Sekundärbahn (62) zu führen.

2. System nach Anspruch 1, **dadurch gekennzeichnet, daß** die Synchronisiermittel (70) eine programmierbare Steuereinheit (70) haben, daß die zweiten Fördermittel (20) von den Synchronisiermitteln (70) gesteuert werden, daß die Sensormittel (S) mit den Synchronisiermitteln (70) verbunden sind, daß die zweiten Betätigungsmittel (60) von den Synchronisiermitteln (70) gesteuert werden, daß die Synchronisiermittel (70) die einzelnen Ausrichtungen, die für jeden Behälter (C) von den Sensormitteln (S) erfaßt werden, der entsprechenden Einheit (30) mit einem schwenkbaren Greifer (40) entlang der Translations- und Ausrichtebahn zuordnen und daß die Synchronisiermittel (70) die zweiten Betätigungsmittel (60) in dem exakten Zeitintervall während der Vorwärtsbewegung der Einheit (30) so betätigen, daß der bewegliche Ablenkflügel (63) eine Schwenkung des Greifers (40) für jede Einheit (30) mit einem schwenkbaren Greifer (40) während der Vorwärtsbewegung entlang der Translations- und Ausrichtebahn in Abhängigkeit von der zugeordneten, zuvor ermittelten Ausrichtung des Behälters (C) bewirkt.

3. System nach Anspruch 1 oder 2, **dadurch gekennzeichnet, daß** die ersten Fördermittel (10) einen Förderer (11) mit einem Förderband (12) aufweisen, das in einer geschlossenen Bahn läuft, wobei sich das obere Trum unterhalb der genannten Translations- und Ausrichtebahn in Förderrichtung von hinten nach vom erstreckt und die Grundflächen der Behälter aufnimmt, und daß die Einheiten (30) mit den schwenkbaren Greifern (40) eine nach der anderen jeden einzelnen Behälter (C) dem in Förderrichtung hinteren Abschnitt des Förderbandes (12) erfassen und dann die auf dem Förderband (12) abgestützten Behälter während der Vorwärtsbewegung der Einheiten (30) mit dem schwenkbaren Greifer (40) mit einem davon erfassten Container (C) selektiv schwenken, wobei die Grundfläche der Container (C) auf dem Förderband (12) gleitet.

4. System nach Anspruch 1 oder 2, **dadurch gekennzeichnet, daß** die ersten Fördermittel (10) einen ersten Förderer (111a) mit einem Förderband (112a) aufweisen, dessen oberes Trum sich unterhalb eines ersten, den Eingang bildenden Translations- und Greifabschnittes der Translations- und Ausrichtebahn befindet, sowie einen zweiten Förderer (111b) mit einem Förderband (112b), dessen oberes Trum sich unterhalb eines dritten und Endabschnittes für die Vorwärtsbewegung und Freigabe der Translations- und Ausrichtebahn befindet.

5. System nach einem der Ansprüche 1 bis 4, **dadurch gekennzeichnet, daß** die Translations- und Ausrichtebahn umfaßt:
- einen ersten Abschnitt für die Vorwärtsbewegung und Erfassung, in dem die ersten Fördermittel (10) und die zweiten Fördermittel (20) die Behälter (C) bzw. die Einheiten (30) mit den schwenkbaren Greifern (40) von hinten nach vom mit derselben Lineargeschwindigkeit und in vertikaler Ausrichtung zueinander bewegen, wobei die Greifbacken (40a - 40b) der entsprechenden Einheiten (30) mit den Greifern (40) so betätigt werden, daß sie sich schließen, um die entsprechenden Behälter (C) zu erfassen, wobei die horizontale Ausrichtung jedes Behälters (C) durch die Sensormittel (S) erfasst wird;
- einen zweiten Abschnitt für die Vorwärtsbewegung und Ausrichtung, in dem die von den Einheiten (30) mit den schwenkbaren Greifern (40) erfaßten Behälter (C) nach vom befördert werden und die schwenkbaren Greifer (40) jeder Einheit (30) entweder geschwenkt oder nicht geschwenkt werden, abhängig von der zuvor erfaßten, horizontalen Ausrichtung des von diesem Greifer (40) getragenen Behälters (C);
- einen dritten Abschnitt für die Vorwärtsbewegung und Freigabe, in dem die ersten Fördermittel (10) und die zweiten Fördermittel (20) die Behälter (C) bzw. die Einheiten (30) mit derselben Lineargeschwindigkeit vorwärtsbewegen und in dem während dieser Vorwärtsbewegung die Greifbacken (40a - 40b) der entsprechenden Einheiten (30) mit den schwenkbaren Greifern (40) so betätigt werden, daß sie sich öffnen und den entsprechenden Behälter (C) freigeben.

6. System nach einem der vorhergehenden Ansprüche, **dadurch gekennzeichnet, daß** die Ausrichtung der einzelnen Behälter (10) in einem in Förderrichtung der Translations- und Ausrichtebahn oberen Abschnitt erfaßt wird, und daß jede einzelne, von den Sensormitteln (S) erfasste Ausrichtung der entsprechenden Einheit (30) mit dem schwenkbaren Greifer (40) zugeordnet wird, welcher den Behälter (C) aufnimmt.

7. System nach einem der vorhergehenden Ansprüche, **dadurch gekennzeichnet, daß** das Förderband (12, 112a, 112b) ein Ansaugband ist.

8. System nach einem der vorhergehenden Ansprüche, **dadurch gekennzeichnet, daß** das Förderband (12, 112a, 112b) eine Tragfläche mit einem niedrigen Reibungskoeffizienten für die Behälter (C) hat.

9. System nach einem der vorhergehenden Ansprüche, **dadurch gekennzeichnet, daß** die zweiten Fördermittel (20) einen sich in Längsrichtung erstreckenden Förderer mit einer geschlossenen Schleife aufweisen, der die Einheiten (30) mit den schwenkbaren Greifern (40) auf einer Umlaufbahn in einer vertikalen und longitudinalen Ebene tragen und vorwärtsbewegen, und daß das untere Trum der Umlaufbahn das Arbeitstrum für die Einheiten (30) mit den schwenkbaren Greifern (40) bildet.

10. System nach einem der vorhergehenden Ansprüche, **dadurch gekennzeichnet, daß** die erste Einrichtung (80) jeder Einheit (30) mit einem schwenkbaren Greifer (40) die Greifbacken (40a - 40b) während der Vorwärtsbewegung der Einheiten (30) auf der Translations- und Ausrichtebahn öffnet und schließt.

11. System nach einem der vorhergehenden Ansprüche, **dadurch gekennzeichnet, daß** in dem Eingangsabschnitt der Translations- und Ausrichtebahn die Einheiten (30) mit den schwenkbaren Greifern (40) transversal geöffnete Greifbacken (40a, 40b) haben, so daß bei der Vorwärtsbewegung der Greifbacken (40a - 40b) diese Greifbacken (40a - 40b) störungsfrei zur Anlage an den gegenüberliegenden Seiten der Behälter (C) kommen.

12. System nach einem der vorhergehenden Ansprüche, **dadurch gekennzeichnet, daß** die erste Einrichtung (80) ein erstes Stellelement (81) hat, das von den Einheiten (30) mit den schwenkbaren Greifern (40) getragen wird, und daß während der Vorwärtsbewegung der Einheiten (30) auf der Translations- und Ausrichtebahn dieses erste Stellelement (81) in Wirkverbindung mit entsprechenden Betätigungsmitteln (50a, 50b) kommt, die entlang der Translations- und Ausrichtebahn angeordnet sind.

13. System nach Anspruch 12, **dadurch gekennzeichnet, daß** das erste Stellelement (81) eine Stange (81) aufweist, die axial beweglich in der Einheit (30) mit dem schwenkbaren Greifer (40) gelagert ist, daß das freie Betätigungsende der Stellstange (81) während der Vorwärtsbewegung der Einheit (30) auf der Translations- und Ausrichtebahn nach oben weist und daß die entsprechenden Betätigungsmittel (50a, 50b) ein oder mehr Nockenprofile (50a, 50b) haben, die sich in Längsrichtung und in einer Position über der Translations- und Ausrichtebahn erstrecken und dazu dienen, die Stellstange (81) axial zu bewegen.

14. System nach einem der vorhergehenden Ansprüche, **dadurch gekennzeichnet, daß** die zweite Einrichtung (90) für jede Einheit (30) während der Vorwärtsbewegung der Einheiten (30) auf der Translations- und Ausrichtebahn die Greifbacken (40a - 40b) des schwenkbaren Greifers (40) dreht oder nicht dreht.

15. System nach Anspruch 14, **dadurch gekennzeichnet, daß** das zweite Stellelement (91) eine Rolle (91) aufweist, die auf der Oberseite eines Zahnsektors (94) exzentrisch zu der Schwenk- und Drehachse angeordnet ist, daß der Zahnsektor (94) in Eingriff mit einem Zahnrad (91) ist, das am oberen Ende einer Buchse (82) befestigt ist, die drehbar in dem Rahmen (31) der Einheit (30) gelagert ist, wobei das gegenüberliegende Ende dieser Buchse (82) mit dem schwenkbaren Greifer (40) fest verbunden ist, und daß die zweiten Betätigungsmittel (60) Nockenbahnen aufweisen, die sich in Längsrichtung erstrecken und durch welche die Rolle (91) während des Vorschubs der Einheiten (30) entlang der Translations- und Ausrichtebahn hindurchläuft.

16. System nach einem der Ansprüche 13 bis 15, **dadurch gekennzeichnet, daß** die Stellstange (81) koaxial zur Schwenkachse (40c) des schwenkbaren Greifers (40) angeordnet ist.

17. System nach Anspruch 15 oder 16, **dadurch gekennzeichnet, daß** die Stellstange (81) koaxial in der Buchse (82) verschiebbar ist.

18. System nach einem der vorhergehenden Ansprüche, **dadurch gekennzeichnet, daß** die Synchronisiermittel (70) eine programmierbare Steuereinheit (70) aufweisen, daß die ersten Fördermittel (10) durch die Synchronisiermittel (70) gesteuert werden, daß die zweiten Fördermittel (20) durch die Synchronisiermittel (70) gesteuert werden und daß die Steuereinheit (70) die ersten Fördermittel (10) und die zweiten Fördermittel (20) mit einer solchen Geschwindigkeit steuern, daß die Behälter (C) und die in Einheiten (30) mit derselben Vorschubgeschwindigkeit vorwärtsbewegt werden.

19. System nach einem der vorhergehenden Ansprüche, **dadurch gekennzeichnet, daß** die Synchronisiermittel (70) eine programmierbare Steuereinheit (70) aufweisen, daß die ersten Fördermittel (10) von einem entsprechenden Servomotor (M 10) angetrieben werden, welcher durch die Synchronisiermittel (70) gesteuert wird, daß die zweiten Fördermittel (20) von einem entsprechenden Servomotor (M20) angetrieben werden, der durch die Synchronisiermittel (70) gesteuert wird, daß die Sensormittel (S) mit den Synchronisiermitteln (70) verbunden sind und daß die zweiten Betätigungsmittel (60) von einem Antriebsorgan (M 60) angetrieben werden, das von den Synchronisiermitteln (70) gesteuert wird.

20. System nach einem der vorhergehenden Ansprüche, **dadurch gekennzeichnet, daß** die Mittel (30) mit einem schwenkbaren Greifer (40) eine Einrichtung (300) umfassen, die so ausgelegt ist, daß sie auf Befehl die Drehbewegung des schwenkbaren Greifers (40) anhält oder freigibt.

21. System nach Anspruch 20, **dadurch gekennzeichnet, daß** die Einrichtung (300) ein bewegliches Stellelement (301) aufweist, welches an den Einheiten (30) mit schwenkbaren Greifern (40) gelagert ist, und daß während des Vorschubs der Einheiten (30) auf der Translations- und Ausrichtebahn das bewegliche Stellelement (301) mit entsprechenden Betätigungsmitteln (400) in Eingriff kommt, die entlang der Translations- und Ausrichtebahn angeordnet sind.

22. System nach Anpruch 20 oder 21, **dadurch gekennzeichnet, daß** das Stellelement (301) eine Nockenfolgerolle (301) aufweist, die am Ende eines Hebels (302) angeordnet ist, der in einer zur Translations- und Ausrichtebahn parallelen Ebene beweglich ist, und daß die zugeordneten Betätigungsmittel (400) ein sich in Längsrichtung erstreckendes Nockenprofil (400) haben, an dem entlang sich die Nockenfolgerolle (301) während des Vorschubs der Einheiten (30) auf der Translations- und Ausrichtebahn vorwärts bewegt.

23. System nach einem der Ansprüche 20 bis 22, **dadurch gekennzeichnet, daß** die Einheit (30) mit schwenkbarem Greifer (40) während des Vorschubs auf der Translations- und Ausrichtebahn durchführt: die drehfeste Verriegelung des schwenkbaren Greifers (40) entlang eines ersten Vorschub- und Greifabschnitts, die Freigabe zur Drehung des schwenkbaren Greifers (40) entlang eines zweiten Vorschub- und Ausrichteabschnitts und die drehfeste Verriegelung des schwenkbaren Greifers (40) entlang eines ditten Vorschub- und Freigabeabschnitts.

## Revendications

1. Système pour déplacer horizontalement en translation et orienter des articles, particulièrement des récipients (C), avec un mouvement continu le long d'une ligne de translation et d'orientation, comprenant :
- des premiers moyens de convoyage, en une position basse, conçus pour déplacer en translation les récipients (C) en file unique, l'un après l'autre, vers la direction aval par rapport à la ligne de translation et d'orientation précitée ;
- des seconds moyens de convoyage (20), en une position haute, conçus pour déplacer en translation en file unique une ou plusieurs unités (30) à pinces rotatives (40), l'une après l'autre, vers la direction aval par rapport à la ligne de translation et d'orientation précitée, dans lesquels chaque unité (30) à pince rotative (40) comprend un premier dispositif (80) pour ouvrir et fermer les mâchoires (40a-40b) de la pince (40) et un second dispositif (90) pour faire pivoter ladite pince (40) ;
- des premiers moyens d'actionnement (50a-50b), conçus pour piloter ledit premier dispositif (80) pour ouvrir et fermer les mâchoires (40a-40b) des pinces rotatives (40) des unités (30) à pinces rotatives (40) ;
- des seconds moyens d'actionnement (60), conçus pour piloter ledit second dispositif (90) pour faire pivoter les pinces rotatives (40) des unités (30),
**caractérisé en ce que**
- des moyens de détection (S) sont positionnés à proximité de la portion amont de ladite ligne de translation et d'orientation, conçus pour relever l'orientation des récipients (C) ;
- des moyens de synchronisation (70) sont conçus pour piloter la synchronisation entre lesdits moyens précités ;
- ledit second dispositif (90) comprend un second élément fonctionnel (91) supporté en déplacement par ladite unité (30) à pince rotative (40) dans lequel au cours de la translation de ladite unité (30) le long de la ligne de translation et d'orientation ledit second élément fonctionnel (91) est prévu pour interagir avec les seconds moyens d'actionnement (60) positionnés le long de la ligne de translation et d'orientation ;
- lesdits seconds moyens d'actionnement (60) comprennent une piste primaire (61a-61b), conçue pour communiquer la commande de non-rotation, une piste ramifiée (62) à partir de ladite piste primaire, conçue pour communiquer la commande de rotation, et une lame de commutation déplaçable commandée (63) conçue pour guider le second élément fonctionnel (91) le long de ladite première piste primaire (61b) ou le long de ladite seconde piste ramifiée (62) au cours de la translation des unités (30) le long de ladite ligne de translation et d'orientation.

2. Système selon la revendication 1, **caractérisé en ce que** lesdits moyens de synchronisation (70) comprennent une unité de commande programmable (70) ; **en ce que** lesdits seconds moyens de convoyage (20) sont pilotés par lesdits moyens de synchronisation (70) ; **en ce que** lesdits moyens de détection (S) sont connectés auxdits moyens de synchronisation (70) ; **en ce que** lesdits seconds moyens d'actionnement (60) sont pilotés par lesdits moyens de synchronisation (70) ; **en ce que** lesdits moyens de synchronisation (70) associent les orientations individuelles relevées par les moyens de détection (S) pour chaque récipient individuel (C) avec l'unité correspondante (30) à pince rotative (40) qui l'attrape, **en ce que** les moyens de synchronisation (70) pilotent la position de translation aval pour chaque unité (30) à pince rotative (40) le long de la ligne de translation et d'orientation, et **en ce que** lesdits moyens de synchronisation (70) mettent en fonctionnement les seconds moyens d'actionnement (60) avec le déroulement temporel correct au cours de la translation aval de l'unité (30) de façon à déplacer la lame de commutation déplaçable (63) pour piloter la rotation des pinces rotatives (40) pour chaque unité (30) à pince rotative (40) au cours de sa translation le long de la ligne de translation et d'orientation en fonction de l'orientation associée du récipient (C) relevée préalablement.

3. Système selon les revendications 1 ou 2, **caractérisé en ce que** lesdits premiers moyens de convoyage (10) comprennent un convoyeur (11) à bande de convoyeur (12) qui court en boucle fermée, dans lequel la nappe supérieure s'étend dans une position basse à partir de l'amont vers l'aval de la ligne de translation et d'orientation précitée pour supporter les bases des récipients, et **caractérisé en ce que** lesdites unités (30) à pinces rotatives (40), l'une après l'autre, assurent la prise de chacun des récipients le long de la portion amont de la bande de convoyeur (12) et assurent ensuite le pivotement sélectif des récipients qui sont supportés par la bande de convoyeur (12) en déplaçant vers l'aval les unités (30) à pince rotative (40) avec un récipient correspondant (2) en prise et en faisant coulisser la base des récipients (12) sur la bande de convoyeur (12).

4. Système selon les revendications 1 ou 2, **caractérisé en ce que** lesdits premiers moyens de convoyage (10) comprennent un premier convoyeur (111a) à bande de convoyeur (112a) dont la nappe supérieure s'étend en une position basse le long d'un premier segment de translation et de prise du chemin de translation et d'orientation, et un second convoyeur (111b) à bande de convoyeur (112b) dont la nappe supérieure s'étend en une position basse le long d'un troisième et final segment de translation et de libération du chemin de translation et d'orientation.

5. Système selon l'une des revendications 1 à 4, **caractérisé en ce que** ladite ligne de translation et d'orientation comprend :
- un premier segment de translation et de prise, dans lequel les premiers moyens de convoyage (10) et les seconds moyens de convoyage (20) déplacent en translation dans une direction aval, respectivement, les récipients (C) et les unités (30) à pinces rotatives (40), à la même vitesse linéaire et dans un alignement vertical l'un par rapport à l'autre, dans lequel les mâchoires (40a-40b) des unités correspondantes (30) à pinces rotatives (40) sont mises en fonctionnement pour se fermer de façon à attraper des récipients correspondants (C), et dans lequel l'orientation horizontale de chaque récipient (C) est relevée par le capteur (S) ;
- un second segment pour la translation et l'orientation, dans lequel les récipients (C) attrapés par les unités (30) à pinces rotatives (40) sont déplacés en translation dans la direction aval, et dans lequel la pince rotative (40) de chaque unité (30) est soit mise en rotation soit non mise en rotation en fonction du relevé préalable de l'orientation horizontale du récipient (C) porté par cette pince (40) ;
- un troisième segment pour la translation et la libération, dans lequel les premiers moyens de convoyage (10) et les seconds moyens de convoyage (20) déplacent en translation dans une direction aval, respectivement, les récipients (C) et les unités (30) à la même vitesse linéaire, et dans lequel, au cours de ladite translation, les mâchoires (40a-40b) des unités correspondantes (30) à pinces rotatives (40) sont mises en fonctionnement pour s'ouvrir pour libérer les récipients correspondants (C).

6. Système selon l'une quelconque des revendications précédentes, **caractérisé en ce que** l'orientation des récipients individuels (C) est relevée dans une position amont par rapport à la ligne de translation et d'orientation, et chaque orientation individuelle relevée par les moyens de détection (S) est alors associée à l'unité correspondante (30) à pince rotative (40) qui attrape le récipient (C).

7. Système selon l'une quelconque des revendications précédentes, **caractérisé en ce que** la bande de convoyeur (12, 112a, 112b) est de type aspirante.

8. Système selon l'une quelconque des revendications précédentes, **caractérisé en ce que** la bande de convoyeur (12, 112a, 112b) présente une surface de support ayant un faible coefficient de friction pour les récipients (C).

9. Système selon l'une quelconque des revendications précédentes, **caractérisé en ce que** lesdits seconds moyens de convoyage (20) comprennent un convoyeur en boucle fermée, s'étendant longitudinalement, conçus pour supporter et déplacer en translation lesdites unités (30) à pinces rotatives (40) le long d'un chemin orbital localisé dans un plan vertical et longitudinal, et **en ce que** le brin inférieur dudit chemin orbital forme le brin actif pour les unités (30) à pinces rotatives (40).

10. Système selon l'une quelconque des revendications précédentes, **caractérisé en ce que** le premier dispositif (80) de chaque unité (30) à pince rotative (40) ouvre et ferme les mâchoires (40a-40b) au cours du déplacement en translation des unités (30) le long de la ligne de translation et d'orientation.

11. Système selon l'une quelconque des revendications précédentes, **caractérisé en ce que** dans la portion initiale de ladite ligne de translation et d'orientation les unités (30) à pinces rotatives (40) ouvrent transversalement les mâchoires (40a-40b) de façon à ce que lorsque les mâchoires (40a-40b) se déplacent vers le bas lesdites mâchoires (40a-40b) peuvent être positionnées sans interférence sur les côtés opposés des récipients (C).

12. Système selon l'une quelconque des revendications précédentes, **caractérisé en ce que** ledit premier dispositif (80) comprend un premier élément fonctionnel (81) supporté par lesdites unités (30) à pinces rotatives (40) et **en ce que**, au cours du déplacement en translation desdites unités (30) le long de la ligne de translation et d'orientation, on fait interagir ledit premier élément fonctionnel (81) avec des moyens d'actionnement correspondants (50a, 50b) positionnés le long de la ligne de translation et d'orientation.

13. Système selon la revendication 12, **caractérisé en ce que** ledit premier élément fonctionnel (81) comprend une barre d'actionnement (81) supportée de façon à être axialement déplaçable par ladite unité (30) à pince rotative (40), **en ce que** ladite barre d'actionnement (81) présente son extrémité libre d'actionnement en une position haute au cours du déplacement en translation de ladite unité (30) le long de la ligne de translation et d'orientation, et **en ce que** les moyens d'actionnement correspondants (50a-50b) comprennent un ou plusieurs profils en came (50a-50b) s'étendant longitudinalement et en une position haute le long de la ligne de translation et d'orientation et conçus pour donner à ladite barre d'actionnement (81) un mouvement axial.

14. Système selon l'une quelconque des revendications précédentes, **caractérisé en ce que** le second dispositif (90) de chaque unité (30) fait pivoter et/ou ne fait pas pivoter les mâchoires (40a-40b) de la pince rotative (40) au cours du déplacement en translation des unités (30) le long de la ligne de translation et d'orientation.

15. Système selon la revendication 14, **caractérisé en ce que** ledit second élément fonctionnel (91) comprend une broche à galet (91) positionnée sur la face supérieure d'un secteur denté (94) dans une position excentrique par rapport au centre (93) de pivotement et de rotation, **en ce que** ledit secteur denté (94) s'engage avec une roue dentée (92) fixée sur le dessus d'un manchon (72) supporté en rotation par le bâti (31) de ladite unité (30), l'extrémité opposée du manchon étant fixée à la pince rotative (40), et **en ce que** les seconds moyens d'actionnement (60) comprennent des pistes à cames s'étendant longitudinalement, dans lesquelles ladite broche à galet (91) est prévue pour se déplacer au cours du déplacement en translation des unités (30) le long de la ligne de translation et d'orientation.

16. Système selon l'une quelconque des revendications 13 à 15, **caractérisé en ce que** ladite barre d'actionnement (81) est positionnée coaxialement par rapport à l'axe de rotation (40c) de la pince rotative (40).

17. Système selon la revendication 15 ou 16, **caractérisé en ce que** ladite barre d'actionnement (81) est positionnée coaxialement et en coulissement par rapport audit manchon (82).

18. Système selon l'une quelconque des revendications précédentes, **caractérisé en ce que** lesdits moyens de synchronisation (70) comprennent une unité de commande programmable (70) ; **en ce que** lesdits premiers moyens de convoyage (10) sont pilotés par lesdits moyens de synchronisation (70) ; **en ce que** lesdits seconds moyens de convoyage (20) sont pilotés par les moyens de synchronisation (70) ; et **en ce que** ladite unité de commande (70) met en fonctionnement les premiers moyens de convoyage (10) et les seconds moyens de convoyage (20) à une vitesse telle que les récipients (C) et les unités (30) sont déplacés en translation à la même vitesse de translation.

19. Système selon l'une quelconque des revendications précédentes, **caractérisé en ce que** lesdits moyens de synchronisation (70) comprennent une unité de commande programmable (70) ; **en ce que** lesdits premiers moyens de convoyage (10) sont mis en fonctionnement par un servomoteur correspondant (M10) piloté par lesdits moyens de synchronisation (70) ; **en ce que** lesdits seconds moyens de convoyage (20) sont mis en fonctionnement par un servomoteur correspondant (M20) piloté par lesdits moyens de synchronisation (70) ; **en ce que** lesdits moyens de détection (S) sont connectés auxdits moyens de synchronisation (70) ; **en ce que** lesdits seconds moyens d'actionnement (60) sont mis en fonctionnement au moyen d'un actionneur correspondant (M60) piloté par lesdits moyens de synchronisation (70).

20. Système selon l'une quelconque des revendications précédentes, **caractérisé en ce que** lesdits moyens (30) à pince rotative (40) comprennent un dispositif (300) conçu pour verrouiller ou relâcher sur commande la rotation de la pince rotative (40).

21. Système selon la revendication 20, **caractérisé en ce que** ledit dispositif (300) comprend un élément fonctionnel déplaçable (301) supporté par lesdites unités (30) à pinces rotatives (40) et **en ce qu'**au cours du déplacement en translation des dites unités (30) le long de la ligne de translation et d'orientation on fait interagir l'élément fonctionnel déplaçable (301) avec des moyens d'actionnement correspondants (400) positionnés le long de la ligne de translation et d'orientation.

22. Système selon la revendication 20 ou 21, **caractérisé en ce que** ledit élément fonctionnel (301) comprend un suiveur de came à broche à galet (301) positionné à l'extrémité d'un levier (302) déplaçable dans un plan parallèle à la ligne de translation et d'orientation, et **en ce que** les moyens d'actionnement correspondants (400) comprennent un profil de came (400) s'étendant longitudinalement, le long duquel il est prévu que ladite broche à galet (301) se déplace au cours du déplacement en translation des unités (30) le long de la ligne de translation et d'orientation.

23. Système selon l'une quelconque des revendications 20 à 22, **caractérisé en ce que**, au cours du déplacement en translation de l'unité (30) à pince rotative (40) le long de la ligne de translation et d'orientation, ledit dispositif (300) effectue : le verrouillage de la rotation de la pince rotative (40) le long d'un premier segment de translation et de prise ; la libération de la rotation de la pince rotative (40) le long d'un second segment de translation et d'orientation ; et le verrouillage de la rotation de la pince rotative (40) le long d'un troisième segment de translation et de libération.
